# EUROPÄISCHE PATENTSCHRIFT

(11) **EP 2 702 686 B1**
(45) Veröffentlichungstag und Bekanntmachung des Hinweises auf die Patenterteilung: **07.10.2015**
(21) Anmeldenummer: 12708276.6
(22) Anmeldetag: 28.02.2012
(51) Int. Cl.: H02P 29/02, H02M 1/38, H02H 7/08, H02H 11/00

(54) **VERFAHREN UND STEUEREINRICHTUNG ZUR SCHUTZZEITEINSTELLUNG IN EINEM ELEKTRISCHEN ANTRIEBSSYSTEM**
METHOD AND CONTROL DEVICE FOR PROTECTION TIME SETTING IN AN ELECTRIC DRIVE SYSTEM
PROCÉDÉ ET DISPOSITIF DE COMMANDE POUR LE RÉGLAGE DU TEMPS DE PROTECTION DANS UN SYSTÈME D'ENTRAÎNEMENT ÉLECTRIQUE

(30) Priorität: 28.04.2011 DE 102011017712
(43) Veröffentlichungstag der Anmeldung: 05.03.2014
(73) Patentinhaber: Robert Bosch GmbH, 70442 Stuttgart (DE)
(72) Erfinder: TRUNK, Martin, 71696 Moeglingen (DE); ROESSLER, Julia, 71665 Vaihingen/Enz (DE); SCHOENKNECHT, Andreas, 71272 Renningen (DE); BRUCKHAUS, Tim, 71679 Asperg (DE)
(86) Internationale Anmeldenummer: PCT/EP2012/053321
(87) Internationale Veröffentlichungsnummer: WO 2012/146412

(56) Entgegenhaltungen:
- EP-A2- 1 619 782
- WO-A2-2004/070923
- DE-A1- 2 557 710
- DE-A1- 2 645 476
- DE-A1-102010 024 234
- JP-A- 2006 295 326
- US-A1- 2010 156 376

## Beschreibung

Die Erfindung betrifft Verfahren sowie eine Steuereinrichtung zur Schutzzeiteinstellung in einem elektrischen Antriebssystem mit einer elektrischen Maschine und einem Pulswechselrichter, insbesondere bei der Ansteuerung von Halbleiterschaltern eines Pulswechselrichters.

### Stand der Technik

Elektrische Maschinen mit Pulswechselrichter werden beispielsweise in Hybridfahrzeugen eingesetzt, wo sie wahlweise im Motor- oder Generatorbetrieb betrieben werden. Im Motorbetrieb erzeugt die elektrische Maschine ein zusätzliches Antriebsmoment, das den Verbrennungsmotor zum Beispiel in einer Beschleunigungsphase unterstützt, im Generatorbetrieb erzeugt sie elektrische Energie, die in einem Energiespeicher, wie beispielsweise einer Batterie oder einem Super-Cap gespeichert wird. Betriebsart und Leistung der elektrischen Maschine werden mittels des Pulswechselrichters eingestellt.

Bekannte Pulswechselrichter umfassen eine Reihe von Schaltern, mit denen die einzelnen Phasen der elektrischen Maschine wahlweise gegen ein hohes Potential, die so genannte Zwischenkreisspannung, oder gegen ein niedriges Bezugspotential, insbesondere Masse geschaltet werden. Die Schalter werden von einem externen Steuergerät angesteuert, das in Abhängigkeit vom Fahrerwunsch (Beschleunigen bzw. Bremsen) einen Soll-Betriebspunkt für die elektrische Maschine berechnet. Der Pulswechselrichter ist mit dem Steuergerät verbunden und erhält von diesem die entsprechenden Betriebsdaten und/oder Steuerbefehle.

Im Falle einer Störung oder eines Fehlers, beispielsweise bei einem zu hohen Batteriestrom oder einem zu hohen Zuleitungsstrom, wird der Pulswechselrichter in einen sicheren Zustand geschaltet, um eine mögliche Schädigung elektrischer Komponenten zu verhindern. Dabei können in herkömmlichen Verfahren verschiedene Schaltungszustände realisiert werden.

Beispielsweise können sämtliche mit dem niedrigen Potential verbundenen Schalter, sogenannte Low-Side-Schalter, geschlossen und alle mit dem hohen Potential verbundenen Schalter, sogenannte High-Side-Schalter, geöffnet. Diese Betriebsart wird auch als Kurzschlusszustand zu niedrigem Potential bezeichnet. Es können alternativ auch alle High-Side-Schalter geschlossen und alle Low-Side-Schatter geöffnet werden, so dass ein Kurzschlusszustand zu hohem Potential entsteht. Bei einem anderen Abschaltverfahren werden sämtliche Schalter des Pulswechselrichters geöffnet. Dies wird auch als Freilaufmodus bezeichnet.

Aus der Druckschrift DE 10 2006 003 254 A1 beispielsweise ist eine Kombination von Abschaltverfahren bekannt: Nachdem beispielsweise der Phasenstrom nach dem Umschalten in den Kurzschlusszustand noch kurze Zeit ansteigen kann, wird dort vorgeschlagen, beide bekannte Abschalt-Betriebsarten sequentiell zu nutzen und die elektrische Maschine zunächst in den Freilaufmodus und anschließend in den Kurzschlusszustand zu schalten.

Der Freilaufmodus wird jeweils für eine bestimmte Schutzzeit aktiviert, so dass auf Grund von Ausschaltverzögerungen oder Restspannungen stets sichergestellt werden kann, dass kein Kurzschluss zwischen hohem und niedrigem Potential auftritt. Diese Schutzzeit ist bei einer Einstellung über Hardware gewissen Toleranzen unterworfen, beispielsweise aufgrund von Temperaturschwankungen oder betriebsdauerbedingten Schwankungen. Im Gegensatz dazu kann bei einer Einstellung der Schutzzeit über die Ansteuersoftware von Pulswechselrichtern eine genaue Einstellung erfolgen, allerdings kann durch die Software nicht auf Fehlerreaktionen in der Hardware reagiert werden.

Die Druckschrift DE 94 13 274 U1 offenbart ein Gate-Array zur Pulsweitenmodulatiön von Ansteuersignalen für Pulswechselrichter mit einem Mikroprozessor zur Erzeugung von PWM-Signalen und Einrichtungen zur Totzeitkompensation, zur Gleichanteilsunterdrückung und zur Verriegelung.

Die Druckschrift EP 1 619 782 A1 offenbart ein Wechselrichtersystem mit Schälteinrichtungen zum Verbinden von Gleichspannungs- und Wechselspannungsanschlüssen, einem Pulsgenerator zur Erzeugung von Ansteuerpulsen für die Schalteinrichtungen sowie einer Übertragungsschaltung zur Verzögerungen der Ansteuerpulse zu Schutzzwecken für die elektrischen Komponenten des Wechselrichtersystems. Die Druckschrift JP 2006-295326 A offenbart eine Ansteuerschaltung mit Schutzfunktion für einen Wechselrichter. Die Druckschrift US 2 010 156 376 empfiehlt zur Erhöhung des Wirkungsgrades eine dynamische Einstellung der Schutzzeilen.

Es besteht ein Bedarf an Lösungen, welche die Sicherheit und Robustheit eines elektrischen Antriebssystems in allen Fehlerfällen gewährleisten können, insbesondere bei einem fehlerinduzierten Übergang zwischen verschiedenen Betriebszuständen eines Pulswechselrichters.

Die Erfindung wird durch die Merkmale des Vorrichtungsanspruchs 1 und des Verfahrensanspruchs 6 definiert. Die abhängigen Ansprüche definieren bevorzugte Ausgestaltungen der Erfindung.

### Offenbarung der Erfindung

Die vorliegende Erfindung schafft daher eine Steuereinrichtung zum Ansteuern eines Pulswechselrichters eines elektrischen Antriebssystems, mit einer Steuerregelschaltung, welche in einem Mikroprozessor ausgestaltet ist und dazu ausgelegt ist, pulsweitenmodulierte Ansteuersignale für komplementäre Schalteinrichtungen des Pulswechselrichters zu erzeugen und Schutzzeiten für die Ansteuerung der komplementären Schalteinrichtungen in Brückenzweigen des Pulswechselrichters dynamisch einzustellen, einer Fehlerlogikschaltung, welche Fehlerzustände in dem Antriebssystem erfassen kann, und welche dazu ausgelegt ist, einen Schaltungszustand oder eine Abfolge von Schaltungszuständen für die Schalteinrichtungen des Pulswechselrichters auszuwählen, die dem entsprechenden Fehlerzustand zugeordnet sind, und einer Schutzschaltung, welche in Hardware ausgeführt ist, und welche eine Signalverzögerungseinrichtung, die dazu ausgelegt ist, die Ansteuersignale zur Implementierung einer Mindestschutzzeit zu verzögern, und eine Verriegelungseinrichtung, die dazu ausgelegt ist, eine Verriegelung zweier komplementärer Schalteinrichtungen eines Brückenzweiges des Pulswechselrichters gegeneinander zu verriegeln, umfasst.

Gemäß einer weiteren Ausführungsform schafft die Erfindung ein System mit einer erfindungsgemäßen Steuereinrichtung, einem Pulswechselrichter mit einer Vielzahl von komplementären Schalteinrichtungen in Vollbrückenschaltung, welche über die Steuereinrichtung angesteuert werden, und einer elektrischen Maschine, welche von dem Pulswechselrichter mit einer elektrischen Versorgungsspannung versorgt wird.

Gemäß einer weiteren Ausführungsform schafft die Erfindung ein Verfahren zum Ansteuern eines Pulswechselrichters eines elektrischen Antriebssystems, mit den Schritten des Erzeugens pulsweitenmodulierter Ansteuersignale für komplementäre Schalteinrichtungen des Pulswechselrichters in einer Softwareschaltung in einem Mikroprozessor durch Einstellen dynamischer Schutzzeiten für die Ansteuerung der komplementären Schalteinrichtungen in Brückenzweigen des Pulswechselrichters, des Erfassens eines Fehlerzustands in dem Antriebssystem, des Auswählens eines Schaltungszustands oder einer Abfolge von Schaltungszuständen für die Schalteinrichtungen des Pulswechselrichters, die dem entsprechenden Fehlerzustand zugeordnet sind, und des Verzögerns der Ansteuersignale zur Implementierung einer Mindestschutzzeit und Verriegeln zweier komplementärer Schalteinrichtungen eines Brückenzweiges des Pulswechselrichters in einer Hardwareschaltung.

### Vorteile der Erfindung

Eine grundlegende Idee der Erfindung ist es, zwei Mechanismen zur Einstellung einer Schutzzeit für die Ansteuerung von Leistungs-Schaltelementen eines Pulswechselrichters zu kombinieren. Einerseits erfolgt eine Einstellung der Schutzzeit über eine Ansteuersoftware, so dass die Länge der Schutzzeit in die Regelung einfließen kann und dynamisch angepasst werden kann. Andererseits erfolgt eine nachgelagerte Einstellung der Schutzzeit in einer der Ansteuersoftware nachgeschalteten Hardwareschaltung, beispielsweise in einem programmierbaren Logikbaustein mit Rechnertaktung, um eine Mindestschutzzeit und eine ausfallsichere Verriegelung zwischen High-Side- und Low-Side-Schaltern des angesteuerten Pulswechselrichters gewährleisten zu können.

Durch ein logisches Hardwareglied vor der Treiberstufe der Leistungs-Schaltelemente können vorteilhafterweise die Mindestschutzmaßnahmen, beispielsweise die Einstellung einer Mindestschutzzeit sowie eine ausfallsichere Verriegelung von komplementären Leistungs-Schattelementen in Halbbrückenanordnung, implementiert werden, ohne dass die Regelung der Schaltzeiten in der Software negativ beeinflusst wird.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung.eines elektrischen Antriebssystems mit Pulswechselrichter;
- Fig. 2: eine schematische Darstellung eines Zustandsdiagramms für verschiedene Schaltungszustände eines Pulswechselrichters;
- Fig. 3: eine schematische Darstellung eines Zustandsdiagramms für verschiedene Schaltungszustände eines Pulswechselrichters gemäß einer Ausführungsform der Erfindung;
- Fig. 4: eine schematische Darstellung eines elektrischen Antriebssystems mit einem Pulswechselrichter und einer Steuereinrichtung zum Ansteuern des Pulswechselrichters gemäß einer weiteren Ausführungsform der Erfindung;
- Fig. 5: eine schematische Darstellung einer Steuereinrichtung nach Fig. 4 in größerem Detail gemäß einer weiteren Ausführungsform der Erfindung; und
- Fig. 6: eine schematische Darstellung eines Verfahrens zum Ansteuern eines Pulswechselrichters gemäß einer weiteren Ausführungsform der Erfindung.

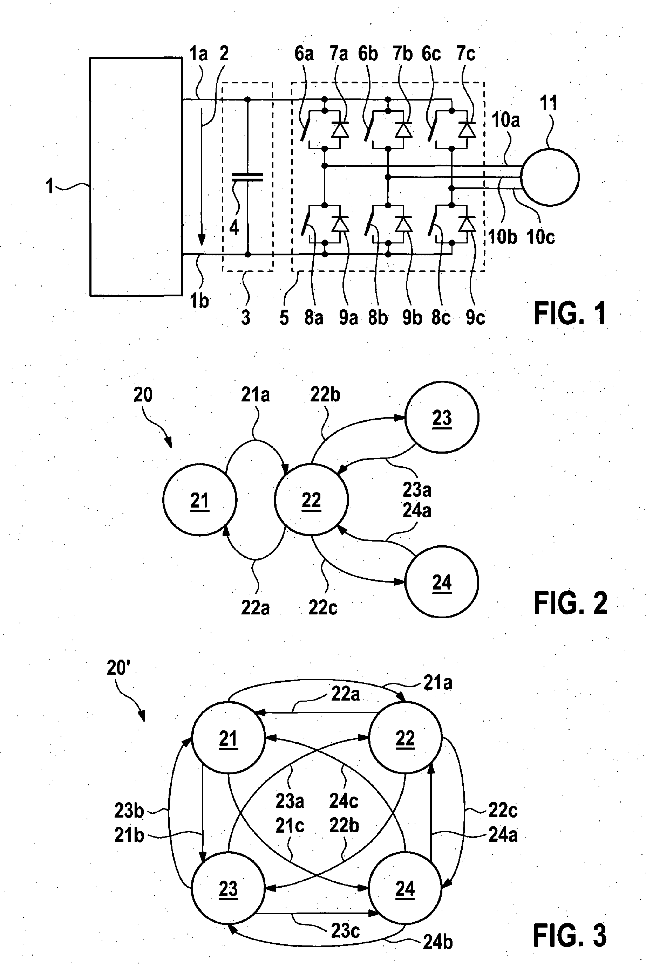

Fig. 1 zeigt eine schematische Darstellung eines elektrischen Antriebssystems. Das elektrische Antriebssystem umfasst eine Energiequelle 1, beispielsweise eine Hochspannungsquelle wie eine Traktionsbatterie, welche eine Versorgungsspannung 2 bereitstellen kann. Die Energiequelle 1 kann in einem Antriebssystem eines elektrisch betriebenen Fahrzeugs beispielsweise als Energiespeicher 1 ausgelegt sein. Es ist auch möglich, dass die Energiequelle 1 netzbasiert ist, das heißt, dass das elektrische Antriebssystem elektrische Energie aus einem Energieversorgungsnetz bezieht. Die Versorgungsspannung 2 kann über einen Zwischenkreis 3 mit einem Zwischenkreiskondensator 4 an Versorgungsanschlüsse eines Pulswechselrichters 5 angelegt werden. Dabei liegt ein Anschluss 1a der Energiequelle 1 auf hohem Potential, und ein Anschluss 1b der Energiequelle 1 auf niedrigem Potential, beispielsweise Masse. Der Pulswechselrichter 5 kann beispielsweise einen dreiphasigen Ausgang aufweisen, wobei über Leistungsanschlüsse 10a, 10b, 10c eine dreiphasige elektrische Maschine 11 an den Pulswechselrichter 5 angeschlossen ist.

Der Pulswechselrichter 5 kann dazu in drei Versorgungszweigen jeweils Schalteinrichtungen mit Schaltern 6a, 6b, 6c, 8a, 8b, 8c und zugeordneten, jeweils parallel geschalteten Freilaufdioden 7a, 7b, 7c, 9a, 9b, 9c aufweisen, welche in einer sechspulsigen Gleichrichter-Brückenschaltung angeordnet sind. Die Schalter 6a, 6b, 6c werden dabei als High-Side-Schalter bezeichnet, die Schalter 8a, 8b, 8c als Low-Side-Schalter. Die Schalter 6a, 6b, 6c, 8a, 8b, 8c können dabei beispielsweise Halbleiterschalter sein, zum Beispiel MOSFET-Schalter oder IGBT-Schalter.

Der Pulswechselrichter 5 ist dazu ausgelegt, über entsprechende Ansteuerung der Schalter 6a, 6b, 6c, 8a, 8b, 8c die Phasen- bzw. Leistungsanschlüsse 10a, 10b, 10c der elektrischen Maschine 11 wechselseitig gegen ein hohes Versorgungspotential 1a, beispielsweise die Versorgungsspannung 2 oder ein niedriges Bezugspotential 1b, beispielsweise ein Massepotential zu schalten. Der Pulswechselrichter 5 bestimmt Leistung und Betriebsart der elektrischen Maschine 11 und wird von einem in Fig. 1 nicht gezeigten Steuergerät entsprechend angesteuert.

Die elektrische Maschine 11 kann somit wahlweise im Motor- oder Generatorbetrieb betrieben werden. Im Motorbetrieb erzeugt sie ein zusätzliches Antriebsmoment, das einen Verbrennungsmotor zum Beispiel in einer Beschleunigungsphase unterstützt. Im Generatorbetrieb kann dagegen mechanische Energie in elektrische Energie gewandelt und in dem Energiespeicher 1 gespeichert bzw. in ein elektrisches Versorgungsnetz rückgespeist werden. Der Zwischenkreis 3, welcher den Zwischenkreiskondensator 4 zur Spannungsstabilisierung umfassen kann, dient zur Versorgung des Pulswechselrichters 5 mit der Versorgungsspannung 2.

Fig. 2 zeigt eine schematische Darstellung eines Zustandsdiagramms 20 von verschiedenen Betriebs- bzw. Schaltungszuständen des in Fig. 1 gezeigten elektrischen Antriebssystems. Der Zustand 21 ist ein Normalbetriebszustand, der eine entsprechende Ansteuerung des Pulswechselrichters 5 zulässt, wenn kein Fehler bzw. keine Störung im elektrischen Antriebssystem vorliegt. Wenn ein Fehler erfasst wird, kann in einem Zustandsübergang 21 a von dem Normalbetriebszustand 21 in einen Freilaufmodus 22 übergegangen werden. Der Freilaufmodus 22 kennzeichnet sich dadurch, dass alle Schalter 6a, 6b, 6c, 8a, 8b, 8c geöffnet sind und ein eventuell in der elektrischen Maschine 11 vorhandener Strom über die Freilaufdioden 7a, 7b, 7c, 9a, 9b, 9c geleitet und damit verringert oder ganz abgebaut wird.

Es ist vorteilhaft, wenn nach einer gewissen Zeitspanne der Freilaufmodus 22 verlassen wird. Falls der Fehler bereits behoben worden ist oder nicht mehr erfasst wird, kann in einem Zustandsübergang 22a wieder in den Normalbetriebszustand 21 übergegangen werden. Falls der Fehler aber weiterhin besteht, kann ausgehend von dem Freilaufmodus 22 ein Zustandsübergang in einen sicheren Kurzschlusszustand vorgesehen sein.

Hierzu wird in Abhängigkeit von der Art des erfassten Fehlers einer der Schaltungszustände 23 oder 24 ausgewählt, in den von dem Freilaufmodus 22 mittels Zustandsübergängen 22b bzw. 22c übergegangen werden kann. Der Schaltungszustand 23 ist dabei ein Kurzschlusszustand 23 zu niedrigem Potential 1b, beispielsweise zu einem Bezugspotential wie einem Massepotential. In dem Kurzschlusszustand 23 sind die Low-Side-Schalter 8a, 8b, 8c geschlossen, während die High-Side-Schalter 6a, 6b, 6c geöffnet sind. In diesem Zustand sind daher die Leistungsanschlüsse 10a, 10b, 10c jeweils mit dem niedrigen Potential 1b verbunden. Dadurch wird ein Stromfluss durch die Freilaufdioden 9a, 9b, 9c bzw. die Low-Side-Schalter 8a, 8b, 8c ermöglicht. Der Schaltungszustand 24 ist hingegen ein Kurzschlusszustand 24 zu hohem Potential 1 a, beispielsweise zu einem Versorgungspotential. In dem Kurzschlusszustand 24 sind die Low-Side-Schalter 8a, 8b, 8c geöffnet, während die High-Side-Schalter 6a, 6b, 6c geschlossen sind. In diesem Zustand sind daher die Leistungsanschlüsse 10a, 10b, 10c jeweils mit dem hohen Potential 1a verbunden. Dadurch wird ein Stromfluss durch die Freilaufdioden 7a, 7b, 7c bzw. die High-Side-Schalter 6a, 6b, 6c ermöglicht.

Fig. 3 zeigt eine schematische Darstellung eines verbesserten Zustandsdiagramms 20' von verschiedenen Betriebs- bzw. Schaltungszuständen des in Fig. 1 gezeigten elektrischen Antriebssystems. Das Zustandsdiagramm 20' unterscheidet sich von dem Zustandsdiagramm 20 dadurch, dass von jedem der vier Schaltungszustände (Normalbetriebszustand 21, Freilaufmodus 22, Kurzschlusszustand 23 zu niedrigem Potential 1b und Kurzschlusszustand 24 zu hohem Potential 1a) direkt in einen anderen Schaltungszustand gewechselt werden kann. Beispielsweise kann von dem Normalbetriebszustand 21 über Zustandsübergänge 21b und 21c in den Kurzschlusszustand 23 zu niedrigem Potential 1b bzw. den Kurzschlusszustand 24 zu hohem Potential 1a gewechselt werden. Von den Kurzschlusszuständen 23 und 24 kann jeweils über Zustandsübergänge 23a und 23b bzw. 24a und 24c entweder in den Normalbetriebszustand 21 oder den Freilaufmodus 22 gewechselt werden. Es ist ebenso möglich, über Zustandsübergänge 23c bzw. 24b von einem Kurzschlusszustand in den anderen direkt zu wechseln.

Je nach Zustandswechsel ist hierbei zu beachten, dass die Schaltvorgänge der Schalter 6a, 6b, 6c bzw. 8a, 8b, 8c je nach verwendeter Schalttechnologie eine bestimmte Zeit in Anspruch nehmen, beispielsweise einige hundert Nanosekunden, und eine zeitliche Überlappung der Schaltvorgänge in den Schaltern eines Phasenversorgungszweigs des Pulswechselrichters 5 das hohe Potential 1a mit dem niedrigen Potential 1b kurzschließen würde, was zu einer Schädigung oder sogar Zerstörung der beteiligten Schalter führen kann.

Daher ist bei einer Ansteuerschaltung eine Mindestschutzzeit vorgesehen, in der jeweils zwei Halbleiterschalter eines Brückenschaltungszweiges des Pulswechselrichters 5, das heißt jeweils Paare eines High-Side- und eines Low-Side-Schalters, beide in geöffnetem Zustand sind, um das Auftreten von Kurzschlüssen in dem jeweiligen Brückenschaltungszweig sicher zu verhindern.

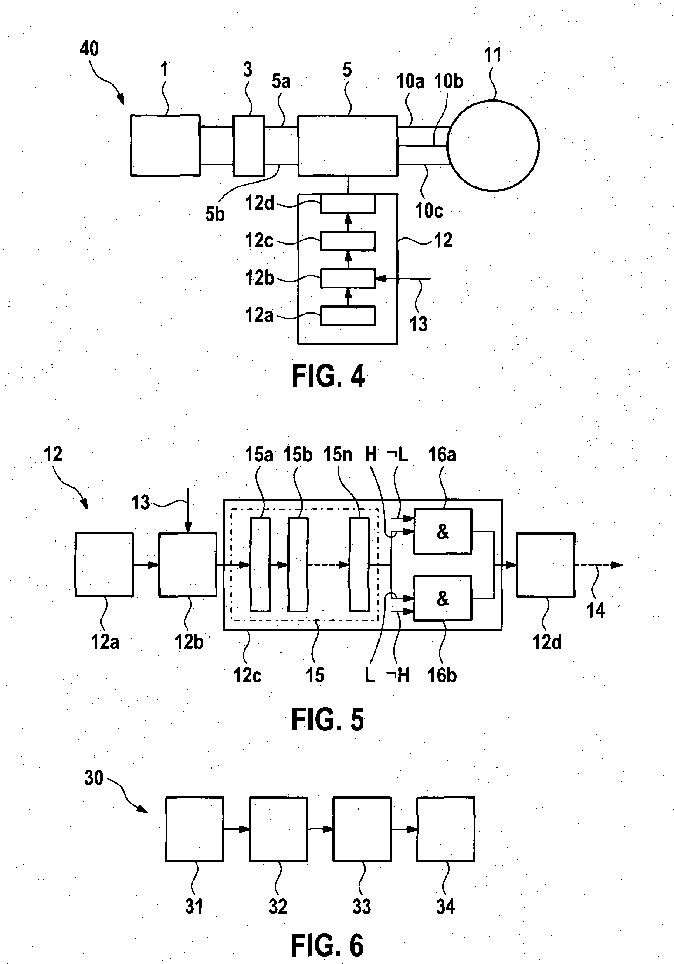

Fig. 4 zeigt eine schematische Darstellung eines elektrischen Antriebssystems 40 mit einem Pulswechselrichter 5 und einer Steuereinrichtung 12 zum Ansteuern des Pulswechselrichters 5. Der Pulswechselrichter 5 umfasst dabei einen ersten Versorgungsanschluss 5b und einen zweiten Versorgungsanschluss 5a, welche jeweils mit einem hohen Potential bzw. einem niedrigen Potential verbunden werden können. Das elektrische Antriebssystem 40 unterscheidet sich dabei von dem in Fig. 1 gezeigten elektrischen Antriebssystem darin, dass eine Steuereinrichtung 12 vorgesehen ist, welche dazu ausgelegt ist, die Schalteinrichtungen des Pulswechselrichters 5 anzusteuern. Dazu umfasst die Steuereinrichtung 12 eine Steuerregelschaltung 12a, eine Fehlerlogikschaltung 12b, eine Schutzschaltung 12c und eine Treiberschaltung 12d.

Die Steuerregelschaltung 12a ist dazu ausgelegt, Steuersignale für die Schalteinrichtungen des Pulswechselrichters 5 zu erzeugen. Beispielsweise kann die Steuerregelschaltung 12a in einem Mikroprozessor ausgestaltet werden, in welchem über Steuersoftware entsprechende Pulsweitenmodulationssignale für den Pulswechselrichter 5 erzeugt werden können. Dabei kann die Steuerregelschaltung 12a weiterhin dazu ausgelegt sein, bereits in den verwendeten Regelalgorithmen Schutzzeiten für die Ansteuerung von komplementären Schalteinrichtungen in Brückenschaltungszweigen des Pulswechselrichters 5 dynamisch einzustellen. Die durch die Steuerregelschaltung 12a generierten Schutzzeiten können beispielsweise von dem momentanen Betriebszustand bzw. Schaltungszustand des elektrischen Antriebssystems 40 abhängen. Beispielsweise können diese Schutzzeiten bei der Anforderung eines Betriebszustandswechsels, zum Beispiel bei einem Wechsel von einem Normalbetriebszustand 21 in einen Freilaufmodus 22 durch die Steuerregelschaltung dynamisch angepasst werden.

Der Steuerregelschaltung 12a nachgeschaltet ist eine Fehlerlogikschaltung 12b. Die Fehlerlogikschaltung 12b kann neben den von der Steuerregelschaltung 12a erzeugten Steuersignalen für die Schalteinrichtungen des Pulswechselrichters 5 Fehlersignale 13 einer (nicht dargestellten) Fehlererfassungseinrichtung verarbeiten. Die Fehlererfassungseinrichtung kann dazu ausgelegt sein, Fehler in dem elektrischen Antriebssystem 40 zu erfassen und als Fehlersignal 13 an die Fehlerlogikschältung 12b weiterzugeben. Die Fehlerlogikschaltung 12b ist dazu ausgelegt, in Abhängigkeit von dem oder den erfassten Fehlern der Fehlererfassungseinrichtung einen Schaltungszustand oder eine Abfolge von Schaltungszuständen auszuwählen, die dem entsprechenden Fehlerbild zugeordnet sind. Dadurch, dass die Fehlerlogikschaltung 12b nach der Steuerregelschaltung 12a angeordnet ist, kann auf Fehlersignale über die Schutzschaltung 12c reagiert werden, das heißt, eine Reaktion auf Fehlersignale in der Software der Steuerregelschaltung 12a ist nicht nötig. Dies verbessert die Sicherheit und Zuverlässigkeit der Steuereinrichtung 12, da unabhängig von einem Ausfall der Software der Steuerregelschaltung 12a Fehlerreaktionen in der Schutzschaltung 12c verarbeitet werden können.

Die Schutzschaltung 12c erhält die von der Fehlerlogikschaltung 12b modifizierten Ansteuersignale für die Schalteinrichtungen des Pulswechselrichters 5. Die Schutzschaltung 12c kann dazu ausgelegt sein, unabhängig von den durch die Steuerregelschaltung 12a eingestellten Schutzzeiten für die Schalteinrichtungen eine Mindestschutzzeit für die Ansteuersignale bereitzustellen. Weiterhin kann die Schutzschaltung 12c dazu ausgelegt sein, einen Verriegelungsschutz zu implementieren, welcher gewährleistet, dass paarweise angesteuerte High-Side- und Low-Side-Schalter eines Brückenschaltungszweiges des Pulswechselrichters 5 gegeneinander verriegelt werden, das heißt, dass ein gleichzeitiges Schließen beider Schalteinrichtungen eines solchen Schalterpaares unmöglich ist.

Die Schutzschaltung 12c kann dazu vorzugsweise in Hardware aufgebaut sein, beispielsweise in diskreter Logik oder als programmierbarer Logikbaustein oder in Kombinationen der genannten Möglichkeiten.

Die von der Schutzschaltung 12c gegebenenfalls modifizierten Ansteuersignale für die Schalteinrichtungen des Pulswechselrichters 5 werden durch eine Treiberschaltung 12d verarbeitet. Die Treiberschaltung 12d bildet die Schnittstelle zwischen der Niedervolt-Steuereinrichtung 12 und einer Hochvoltansteuerschaltung für die Schalteinrichtungen des Pulswechselrichters 5. Die Schutzschaltung 12c ist somit das letzte logische Glied vor der Treiberschaltung 12d, so dass in jedem Fall, also insbesondere auch unabhängig von der Regelung der Steuerregelschaltung 12a, eine Mindestschutzzeit und ein Verriegelungsmechanismus zuverlässig implementiert werden können.

Fig. 5 zeigt eine schematische Darstellung einer Steuereinrichtung 12 nach Fig. 4 in größerem Detail. Die Steuereinrichtung 12 in Fig. 5 unterscheidet sich von der Steuereinrichtung 12 in Fig. 4 dahingehend, dass mögliche Komponenten der Schutzschaltung 12c in größerem Detail gemäß einer Ausführungsform gezeigt sind.

Die Schutzschaltung 12c umfasst eine Signalverzögerungseinrichtung 15, welche mit einer Verriegelungseinrichtung 16a, 16b gekoppelt ist. Die Signalverzögerungseinrichtung 15 kann dabei eine Vielzahl von Schieberegistern 15a, 15b, ... 15n umfassen, welche die Ansteuersignale von der Fehlerlogikschaltung 12b erhalten, und welche dazu ausgelegt sind, die Ansteuersignale um eine vorbestimmte Zeitspanne zu verschieben. Die Signalverzögerungseinrichtung 15 kann beispielsweise dazu ausgelegt sein, über die Verzögerung der Ansteuersignale durch die Schieberegister 15a, 15b, ... 15n eine einstellbare Länge der Mindestschutzzeit zu definieren. Die Anzahl der Schieberegister 15a, 15b, ... 15n ist in Fig. 5 nur beispielhaft mit drei angegeben, es ist selbstverständlich, dass jede andere Anzahl an Schieberegistern ebenso möglich ist. Beispielsweise kann die Granularität der Mindestschutzzeit über die Anzahl der anwählbaren Schieberegister der Signalverzögerungseinrichtung 15 angepasst werden. Die Schieberegister 15a, 15b, ... 15n können beispielsweise D-Flip-Flop-Schaltungen sein, welche über den Rechnertakt der Steuerregelschaltung 12a getaktet werden. Vorteilhafterweise ist für die Ansteuersignale jeder Schalteinrichtung des Pulswechselrichters 5 eine eigene Schieberegisterkette 15a, 15b, ... 15n vorgesehen. Die Schieberegister 15a, 15b, ... 15n können beispielsweise über den Rechnertakt der Steuerregelschaltung 12a getaktet werden.

Die Schutzschaltung 12c umfasst weiterhin Verriegelungseinrichtungen 16a, 16b, welche dazu ausgelegt sind, eine Verriegelung komplementärer Schalteinrichtungen eines Brückenzweiges des Pulswechselrichters 5 sicherzustellen. Die Verriegelungseinrichtung 16a empfängt als Eingangssignale das Ansteuersignal H für die High-Side-Schalter sowie das negierte Ansteuersignal ¬L für die Low-Side-Schalter. Als Ausgabesignal erzeugt die Verriegelungseinrichtung 16a, welche beispielsweise als logisches UND-Gatter aufgebaut sein, ein Ausgabesignal, welches der logischen UND-Verknüpfung des Ansteuersignals H und des Ansteuersignals ¬L entspricht. Auf diese Weise kann das Ansteuersignal H für die High-Side-Schalter nur dann freigegeben werden, wenn die Low-Side-Schalter sicher geschlossen sind. Die Verriegelungseinrichtung 16b empfängt als Eingangssignale das Ansteuersignal L für die Low-Side-Schalter sowie das negierte Ansteuersignal ¬H für die High-Side-Schalter. Als Ausgabesignal erzeugt die Verriegelungseinrichtung 16b, welche beispielsweise als logisches UND-Gatter aufgebaut sein, ein Ausgabesignal, welches der logischen UND-Verknüpfung des Ansteuersignals L und des Ansteuersignals ¬H entspricht. Auf diese Weise kann das Ansteuersignal L für die Low-Side-Schalter nur dann freigegeben werden, wenn die High-Side-Schalter sicher geschlossen sind.

Fig. 6 zeigt eine schematische Darstellung eines Verfahrens 30 zum Ansteuern eines Pulswechselrichters. In einem ersten Schritt 31 erfolgt ein Erzeugen pulsweitenmodulierter Ansteuersignale für Schalteinrichtungen des Pulswechselrichters in einer Softwareschaltung. In einem zweiten Schritt 32 erfolgt ein Erfassen eines Fehlerzustands in dem Antriebssystem. In einem dritten Schritt 33 erfolgt ein Auswählen eines Schaltungszustands oder einer Abfolge von Schaltungszuständen für die Schalteinrichtungen des Pulswechselrichters, die dem entsprechenden Fehlerzustand zugeordnet sind. In einem vierten Schritt 34 erfolgt ein Verzögern der Ansteuersignale zur Implementierung einer Mindestschutzzeit und Verriegeln zweier komplementärer Schalteinrichtungen eines Brückenzweiges des Pulswechselrichters in einer Hardwareschaltung. Das Verfahren 30 kann insbesondere zum Betreiben eines elektrischen Antriebssystems, wie es in Fig. 4 und 5 dargestellt ist, verwendet werden.

## Patentansprüche

1. Steuereinrichtung (12) zum Ansteuern eines Pulswechselrichters (5) eines elektrischen Antriebssystems, mit:
einer Steuerregelschaltung (12a), welche in einem Mikroprozessor ausgestaltet ist und dazu ausgelegt ist, pulsweitenmodulierte Ansteuersignale für komplementäre Schalteinrichtungen des Pulswechselrichters (5) zu erzeugen und Schutzzeiten für die Ansteuerung der komplementären Schalteinrichtungen in Brückenzweigen des Pulswechselrichters (5) dynamisch einzustellen;
einer Fehlerlogikschaltung (12b), welche Fehlerzustände in dem Antriebssystem erfassen kann, und welche dazu ausgelegt ist, einen Schaltungszustand oder eine Abfolge von Schaltungszuständen für die Schalteinrichtungen des Pulswechselrichters (5) auszuwählen, die dem entsprechenden Fehlerzustand zugeordnet sind; und
einer Schutzschaltung (12c), welche in Hardware ausgeführt ist, und welche eine Signalverzögerungseinrichtung (15), die dazu ausgelegt ist, die Ansteuersignale zur Implementierung einer Mindestschutzzeit zu verzögern, so dass einerseits eine Einstellung der Schutzzeiten über eine Ansteuersoftware und andererseits eine nachgelagerte Einstellung der Schutzzeiten in einer der Ansteuersoftware nachgeschalteten Hardwareschaltung erfolgt, und eine
Verriegelungseinrichtung (16a, 16b), die dazu ausgelegt ist, eine Verriegelung zweier komplementärer Schalteinrichtungen eines Brückenzweiges des Pulswechselrichters (5) gegeneinander zu verriegeln, umfasst.

2. Steuereinrichtung (12) nach Anspruch 1, weiterhin mit:
eine Treiberschaltung (12d), welche dazu ausgelegt ist, in Abhängigkeit von den von der Schutzschaltung (12c) ausgegebenen Ansteuersignalen die Schalteinrichtungen des Pulswechselrichters (5) zu treiben.

3. Steuereinrichtung (12) nach einem der Ansprüche 1 und 2, wobei die Signalverzögerungseinrichtung (15) eine Vielzahl von Schieberegistern (15a, 15b, 15n) umfasst, welche über den Rechnertakt der Steuerregelschaltung (12a) getaktet sind.

4. Steuereinrichtung (12) nach einem der Ansprüche 1 bis 3, wobei die Verriegelungseinrichtung (16a, 16b) mindestens zwei logische UND-Gatter umfasst, welche als Eingangssignale jeweils ein Ansteuersignal einer ersten Schalteinrichtung und ein negiertes Ansteuersignal einer zu der ersten Schalteinrichtung komplementären zweiten Schalteinrichtung erhalten.

5. System, mit:
einer Steuereinrichtung (12) nach einem der Ansprüche 1 bis 4;
einem Pulswechselrichter (5) mit einer Vielzahl von komplementären Schalteinrichtungen in Vollbrückenschaltung, welche über die Steuereinrichtung (12) angesteuert werden; und einer elektrischen Maschine (1), welche von dem Pulswechselrichter (5) mit einer elektrischen Versorgungsspannung versorgt wird.

6. Verfahren zum Ansteuern eines Pulswechselrichters (5) eines elektrischen Antriebssystems, mit den Schritten:
Erzeugen pulsweitenmodulierter Ansteuersignale für komplementäre Schalteinrichtungen des Pulswechselrichters (5) in einer Softwareschaltung in einem Mikroprozessor durch Einstellen dynamischer Schutzzeiten für die Ansteuerung der komplementären Schalteinrichtungen in Brückenzweigen des Pulswechselrichters (5);
Erfassen eines Fehlerzustands in dem Antriebssystem;
Auswählen eines Schaltungszustands oder einer Abfolge von Schaltungszuständen für die Schalteinrichtungen des Pulswechselrichters (5), die dem entsprechenden Fehlerzustand zugeordnet sind; und
Verzögern der Ansteuersignale zur Implementierung einer Mindestschutzzeit, so dass einerseits eine Einstellung der Schutzzeiten über eine Ansteuersoftware und andererseits eine nachgelagerte Einstellung der Schutzzeiten in einer der Ansteuersoftware nachgeschalteten Hardwareschaltung erfolgt, und Verriegeln zweier komplementärer Schalteinrichtungen eines Brückenzweiges des Pulswechselrichters (5) in einer Hardwareschaltung.

## Claims

1. Control device (12) for controlling a pulse-controlled inverter (5) of an electric drive system, comprising:
an open-loop/closed-loop control circuit (12a) which is configured in a microprocessor and is designed to generate pulse-width-modulated control signals for complementary switching devices of the pulse-controlled inverter (5) and to dynamically set protection times for the control of the complementary switching devices in bridge branches of the pulse-controlled inverter (5);
a fault logic circuit (12b), which can detect fault states in the drive system and which is designed to select a switching state or a sequence of switching states for the switching devices of the pulse-controlled inverter (5) which are assigned to the corresponding fault state; and
a protection circuit (12c), which is embodied in hardware and which comprises a signal delay device (15), which is designed to delay the control signals in order to implement a minimum protection time, such that, firstly, a setting of the protection times via control software is effected and, secondly, a downstream setting of the protection times is effected in a hardware circuit connected downstream of the control software, and a latching device (16a, 16b),
which is designed to latch two complementary switching devices of a bridge branch of the pulse-controlled inverter (5) with respect to one another.

2. Control device (12) according to Claim 1, furthermore comprising:
a driver circuit (12d), which is designed to drive the switching devices of the pulse-controlled inverter (5) depending on the control signals output by the protection circuit (12c).

3. Control device (12) according to either of Claims 1 and 2, wherein the signal delay device (15) comprises a multiplicity of shift registers (15a, 15b, 15n), which are clocked via the computer clock of the open-loop/closed-loop control circuit (12a).

4. Control device (12) according to any of Claims 1 to 3, wherein the latching device (16a, 16b) comprises at least two logic AND gates, which receive as input signals in each case a control signal of a first switching device and a negated control signal of a second switching device, which is complementary to the first switching device.

5. System, comprising:
a control device (12) according to any of Claims 1 to 4;
a pulse-controlled inverter (5) having a multiplicity of complementary switching devices in a full-bridge circuit, which are controlled via the control device (12); and
an electric machine (1), which is supplied with an electrical supply voltage by the pulse-controlled inverter (5).

6. Method for controlling a pulse-controlled inverter (5) of an electric drive system, comprising the following steps:
generating pulse-width-modulated control signals for complementary switching devices of the pulse-controlled inverter (5) in a software circuit in a microprocessor by setting dynamic protection times for the control of the complementary switching devices in bridge branches of the pulse-controlled inverter (5);
detecting a fault state in the drive system;
selecting a switching state or a sequence of switching states for the switching devices of the pulse-controlled inverter (5) which are assigned to the corresponding fault state; and
delaying the control signals in order to implement a minimum protection time, such that, firstly, a setting of the protection times via control software is effected and, secondly, a downstream setting of the protection times is effected in a hardware circuit connected downstream of the control software, and
latching two complementary switching devices of a bridge branch of the pulse-controlled inverter (5) in a hardware circuit.

## Revendications

1. Dispositif de commande (12) destiné à commander un onduleur à impulsions (5) d'un système d'entraînement électrique, comprenant :
un circuit de régulation de commande (12a), lequel est réalisé dans un microprocesseur et est conçu pour générer des signaux d'attaque modulés en largeur d'impulsion pour des dispositifs de commutation complémentaires de l'onduleur à impulsions (5) et
régler dynamiquement des temps de protection pour l'attaque des dispositifs de commutation complémentaires dans des branches de pont de l'onduleur à impulsions (5) ;
un circuit logique d'erreur (12b), lequel peut détecter les situations d'erreur dans le système d'entraînement et qui est conçu pour sélectionner un état de commutation ou une séquence d'états de commutation pour les dispositifs de commutation de l'onduleur à impulsions (5) qui sont associés à la situation d'erreur correspondante ; et
un circuit de protection (12c) qui est réalisé sous forme matérielle et qui comprend un dispositif de retard de signal (15), lequel est conçu pour retarder les signaux d'attaque en vue de mettre en oeuvre un temps de protection minimum de sorte que soient effectués d'une part un réglage des temps de protection par le biais d'un logiciel d'attaque et d'autre part un réglage en aval des temps de protection dans un circuit matériel branché en aval du logiciel d'attaque, et un dispositif de verrouillage (16a, 16b) qui est conçu pour verrouiller un dispositif de verrouillage de deux dispositifs de commutation complémentaires d'une branche de pont de l'onduleur à impulsions (5) l'un par rapport à l'autre.

2. Dispositif de commande (12) selon la revendication 1, comprenant en outre :
un circuit pilote (12d) qui est conçu pour piloter les dispositifs de commutation de l'onduleur à impulsions (5) en fonction des signaux d'attaque délivrés par le circuit de protection (12c).

3. Dispositif de commande (12) selon l'une des revendications 1 et 2, avec lequel le dispositif de retard de signal (15) comprend une pluralité de registres à décalage (15a, 15b, 15n) qui sont cadencés par le biais d'une horloge de processeur du circuit de régulation de commande (12a).

4. Dispositif de commande (12) selon l'une des revendications 1 à 3, avec lequel le dispositif de verrouillage (16a, 16b) comprend au moins deux portes logiques ET, lesquelles reçoivent comme signaux d'entrée respectivement un signal d'attaque d'un premier dispositif de commutation et un signal d'attaque inversé logiquement d'un deuxième dispositif de commutation complémentaire du premier dispositif de commutation.

5. Système comprenant :
un dispositif de commande (12) selon l'une des revendications 1 à 4 ;
un onduleur à impulsions (5) comprenant une pluralité de dispositifs de commutation complémentaires branchés en pont intégral, lesquels sont commandés par le biais du dispositif de commande (12) ; et
une machine électrique (1) qui est alimentée par l'onduleur à impulsions (5) avec une tension d'alimentation électrique.

6. Procédé de commande d'un onduleur à impulsions (5) d'un système d'entraînement électrique, comprenant les étapes suivantes :
génération de signaux d'attaque modulés en largeur d'impulsion pour des dispositifs de commutation complémentaires de l'onduleur à impulsions (5) dans un circuit logiciel dans un microprocesseur par réglage des temps de protection dynamiques pour l'attaque des dispositifs de commutation complémentaires dans des branches de pont de l'onduleur à impulsions (5) ;
détection d'une situation d'erreur dans le système d'entraînement ;
sélection d'un état de commutation ou d'une séquence d'états de commutation pour les dispositifs de commutation de l'onduleur à impulsions (5) qui sont associés à la situation d'erreur correspondante ; et
retard des signaux d'attaque en vue de mettre en oeuvre un temps de protection minimum de sorte que soient effectués d'une part un réglage des temps de protection par le biais d'un logiciel d'attaque et d'autre part un réglage en aval des temps de protection dans un circuit matériel branché en aval du logiciel d'attaque, et verrouillage de deux dispositifs de commutation complémentaires d'une branche de pont de l'onduleur à impulsions (5) dans un circuit matériel.
